(19) Europäisches Patentamt
European Patent Office
Office européen des brevets

(11) **EP 4 460 262 B1**

(12) **FASCICULE DE BREVET EUROPEEN**

(45) Date de publication et mention
de la délivrance du brevet:
**03.12.2025 Bulletin 2025/49**

(21) Numéro de dépôt: **23700456.9**

(22) Date de dépôt: **05.01.2023**

(51) Classification Internationale des Brevets (IPC):
***A61C 5/42*** *(2017.01)*

(52) Classification Coopérative des Brevets (CPC):
**A61C 5/42**

(86) Numéro de dépôt international:
**PCT/EP2023/050200**

(87) Numéro de publication internationale:
**WO 2023/131661 (13.07.2023 Gazette 2023/28)**

(54) **INSTRUMENT ENDODONTIQUE PRÉSENTANT UNE FENTE LONGITUDINALE NON RECTILIGNE, ET PROCÉDÉ DE FABRICATION D'UN TEL INSTRUMENT**

ENDODONTISCHES INSTRUMENT MIT NICHT-REKTILINEARER LÄNGSNUT UND VERFAHREN ZUR HERSTELLUNG EINES SOLCHEN INSTRUMENTS

ENDODONTIC INSTRUMENT HAVING A NON-RECTILINEAR LONGITUDINAL SLOT, AND METHOD FOR MANUFACTURING SUCH AN INSTRUMENT

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **06.01.2022 FR 2200089**
**06.01.2022 FR 2200090**

(43) Date de publication de la demande:
**13.11.2024 Bulletin 2024/46**

(73) Titulaire: **Neolix**
**53600 Evron (FR)**

(72) Inventeurs:
• **PERNOT, Jacques**
**25870 Vieilley (FR)**
• **PAUL, Emilien**
**53600 Mezangers (FR)**

(74) Mandataire: **Boüan du Chef du Bos, Louis-Paterne**
**Cabinet Bouan**
**34, rue de Bagneaux**
**45140 Saint Jean de la Ruelle (FR)**

(56) Documents cités:
WO-A1-2021/181378    FR-A1- 2 867 995
FR-A1- 2 964 851    US-A1- 2011 212 413

## Description

### Domaine de l'invention

La présente invention concerne les instruments endodontiques, destinés à être utilisés par un dentiste pour réaliser des soins endodontiques.

Elle concerne en particulier les instruments endodontiques présentant une fente longitudinale, sur au moins une partie de leur longueur, séparant l'instrument en plusieurs brins distincts.

L'invention concerne également un procédé de fabrication de tels instruments endodontiques.

### Art antérieur

Les instruments endodontiques sont couramment utilisés par les dentistes pour le traitement de dents dévitalisées. En particulier, de tels instruments sont utilisés pour nettoyer et mettre en forme les canaux radiculaires.

Le canal radiculaire présente une forme qui n'est pas nécessairement rectiligne, et qui peut parfois être franchement coudée. Ce canal est par ailleurs très étroit et relativement profond, s'étendant jusqu'à l'extrémité de la racine de la dent. Son nettoyage et sa mise en forme sont réalisés par des instruments endodontiques, par exemple des limes, qui doivent être à la fois très fins, souples, pour s'adapter aux courbures du canal radiculaire, et solides pour ne pas risquer de se casser à l'intérieur de ce canal radiculaire.

De tels instruments sont souvent réalisés dans un alliage présentant des propriétés superélastiques, tel qu'un alliage de nickel-titane. Ils sont généralement usinés pour que la portion devant pénétrer dans le canal radiculaire présente des formes variées, permettant la mise en forme correcte du canal radiculaire. Un tel instrument endodontique peut être entraîné en rotation continue ou alternée, ou en mouvements de va-et-vient, par le dentiste ou par un porte-instrument dans lequel l'instrument endodontique est monté.

Les instruments endodontiques peuvent être fabriqués selon plusieurs procédés. Il est ainsi connu de fabriquer des instruments en usinant, à l'aide d'une meule, un barreau de matériau métallique, généralement constitué d'un alliage de nickel et de titane. On connaît également, à l'exemple du document FR2867995A1, des méthodes d'usinage de barreaux métalliques par électroérosion à fil. Il est encore connu d'usiner un barreau métallique, puis de le déformer pour lui donner sa forme définitive.

Ces différentes méthodes de fabrication permettent chacune l'obtention d'instruments endodontiques de formes différentes. La variété de ces formes permet d'obtenir des instruments ayant des caractéristiques variées, notamment en terme de résistance à la rupture, de résistance à la fatigue, de résistance à des efforts de torsion, d'efficacité d'usinage du canal radiculaire, d'efficacité d'évacuation des débris, de souplesse, etc.

Parmi ces instruments endodontiques, certains présentent une fente longitudinale s'étendant sur au moins une partie de la longueur de l'instrument, et séparant celui-ci en plusieurs brins distincts. On connaît ainsi, du document FR2964851, un instrument endodontique évidé au moyen d'une fente s'étendant longitudinalement sur au moins une partie de la longueur de l'instrument, et divisant l'instrument en plusieurs brins, sur cette partie de sa longueur.

De telles fentes longitudinales, dans un instrument endodontique, peuvent présenter plusieurs avantages. Ainsi, elles peuvent servir à guider un fluide d'irrigation le long de l'instrument endodontique. Par ailleurs, elles confèrent à l'instrument endodontique une plus grande flexibilité, et lui permettent, dans certaines situations, d'adapter son diamètre aux dimensions du canal radiculaire dans lequel il est introduit. Enfin, un instrument endodontique dont la section est décomposée en plusieurs brins peut présenter un plus grand nombre d'arêtes aiguës, permettant la découpe ou le grattage plus efficace des parois du canal radiculaire.

Les différents brins constituant une portion fendue d'un instrument endodontique peuvent se déplacer les uns par rapport aux autres. Il peut notamment arriver que, au niveau de certaines sections de l'instrument, les différents brins glissent l'un par rapport à l'autre dans des directions opposées, parallèles à la fente. Dans certaines situations, ce déplacement latéral des brins, l'un par rapport à l'autre, peut s'avérer préjudiciable. Il peut ainsi faire apparaître, en périphérie de l'instrument, des arêtes tranchantes s'éloignant excessivement de l'axe de rotation de l'instrument. Un tel glissement peut également être préjudiciable à la cohésion des différents brins de l'instrument, et entraîner une destruction de celui-ci par l'éloignement des brins.

Il existe donc un besoin d'identifier de nouvelles formes d'instruments pouvant être fabriquées facilement, susceptibles de présenter des caractéristiques améliorées par rapport aux instruments connus.

Il existe en particulier un besoin d'instrument endodontique dont une portion de la longueur est traversée par une fente, séparant cette portion de la longueur en différents brins, dans lesquels les déplacements des brins les uns par rapport aux autres sont mieux maîtrisés que dans les solutions de l'art antérieur. Il peut également exister un besoin de telles solutions offrant des arêtes plus aiguës, ou au contraire moins aiguës que dans les solutions de l'art antérieur.

**Objectifs de l'invention**

La présente invention a pour objectif de proposer des instruments endodontiques dont une portion de la longueur est traversée par une fente, séparant cette portion de la longueur en différents brins, ayant des formes distinctes de celles des instruments connus de l'art antérieur.

Un objectif particulier de l'invention est de proposer de tels instruments endodontiques dont les caractéristiques permettent d'obtenir une grande efficacité pour l'usinage d'un canal radiculaire, une meilleure cohésion des brins entre eux, une plus grande souplesse, et/ou une meilleure maîtrise de la forme des arêtes.

Un autre objectif de l'invention est de proposer de tels instruments endodontiques qui peuvent être fabriqués facilement, avec des procédés très proches des procédés de fabrication connus.

L'invention a également pour objectif de proposer un procédé de fabrication efficace et facile à mettre en œuvre pour réaliser de tels instruments endodontiques.

**Exposé de l'invention**

Ces objectifs, ainsi que d'autres qui apparaîtront plus clairement par la suite, sont atteints à l'aide d'un instrument endodontique s'étendant le long d'un axe longitudinal, l'instrument présentant au moins une fente longitudinale, sur au moins une partie de sa longueur, séparant l'instrument en plusieurs brins distincts. Selon l'invention, la fente présente, dans une section perpendiculaire à l'axe longitudinal, une forme linéaire non rectiligne, et la fente forme, sur chacun des brins de l'instrument endodontique, une parcelle de surface s'inscrivant dans une surface réglée dont :

- une génératrice unique passe par chaque point,
- les génératrices ne s'inscrivent dans aucun plan orthogonal à l'axe longitudinal,
- les génératrices ne sont pas parallèles à l'axe longitudinal, et
- les génératrices ne sont pas toutes parallèles entre elles.

De telles fentes permettent d'obtenir des configurations d'instruments endodontiques différentes de celle connues de l'art antérieur, avec des fentes présentant, par exemple, des formes concaves ou/et convexes. De telles formes de fentes peuvent notamment offrir à l'instrument des arêtes plus aigües, et/ou d'assurer une meilleure résistance de l'instrument.

De telles formes de fentes, non rectilignes dans un plan transversal, peuvent être obtenues facilement avec un instrument de découpe linéaire.

De préférence, chacune des parcelles de surface présente une forme hélicoïdale s'enroulant autour de l'axe longitudinal de l'instrument.

Selon un autre mode de réalisation envisageable, la fente présente des caractéristiques géométriques différentes sur différentes sections voisines de l'instrument.

De préférence, l'instrument endodontique présente au moins deux fentes longitudinales, sur au moins une partie de sa longueur, au moins l'une des fentes présentant, dans une section perpendiculaire à l'axe longitudinal, une forme linéaire non rectiligne.

L'instrument peut ainsi, sur certaines parties de sa longueur, être séparé en trois ou quatre brins distincts.

Selon un autre mode de réalisation, au moins deux des fentes se rejoignent, dans au moins certaines des sections de l'instrument.

Avantageusement, la ou les fentes ont pour effet de séparer certains brins du reste de l'instrument, et de permettre leur retrait.

A titre d'exemple, ces fentes offrent la possibilité de retirer le brin interne de l'instrument endodontique et de créer un instrument avec un espace creux en son centre, autour de l'axe longitudinal.

L'invention concerne également un procédé de fabrication de cet instrument endodontique s'étendant le long d'un axe longitudinal. Selon l'invention, ce procédé comprend une étape de découpe d'une fente longitudinale, sur au moins une partie de la longueur de l'instrument, la découpe étant effectuée par un instrument de découpe linéaire non orthogonal à l'axe longitudinal, la découpe étant obtenue par un déplacement de l'instrument, par rapport à l'instrument de découpe linéaire, le déplacement combinant au moins une translation de l'instrument le long de l'axe longitudinal et une rotation de l'instrument autour de l'axe longitudinal.

De façon préférentielle, l'instrument de découpe linéaire est un fil de coupe par électroérosion.

Ainsi, il est possible de fabriquer des instruments endodontiques présentant des formes complexes à l'aide d'un outil bien connu par l'homme du métier.

Par ailleurs, la présente description concerne également un instrument endodontique s'étendant le long d'un axe longitudinal, qui présente au moins une parcelle de surface s'inscrivant dans une surface réglée dont :

- une génératrice unique passe par chaque point,
- les génératrices ne s'inscrivent dans aucun plan orthogonal à l'axe longitudinal,
- les génératrices ne sont pas parallèles à l'axe longitudinal, et
- les génératrices ne sont pas toutes parallèles entre elles.

Ainsi, il est possible d'obtenir de nombreuses formes d'instruments endodontiques présentant une surface réglée, dont des instruments endodontiques présentant une surface réglée de forme héliocoïdale, notamment par des méthodes d'usinage utilisant des outils de coupe linéaire rectiligne.

De tels instruments endodontiques peuvent, le cas échéant, être découpés au cours d'une étape ultérieure pour former une fente, qui peut avantageusement présenter les caractéristiques de l'invention.

Avantageusement, les génératrices de la parcelle de surface s'inscrivent dans un plan formant un angle constant, en valeur absolue, avec l'axe longitudinal.

Cet angle constant permet notamment de faciliter la fabrication des instruments endodontiques.

Selon un mode de réalisation possible, les génératrices de la parcelle de surface sont situées à une distance identique de l'axe longitudinal.

Selon un autre mode de réalisation avantageux, les génératrices de la parcelle de surface sont situées à une distance de l'axe longitudinal qui varie de façon régulière le long de l'axe longitudinal.

Avec de telles génératrices, l'instrument endodontique possède ainsi des dimensions qui varient sur l'ensemble de sa longueur. Cet instrument peut ainsi présenter une forme générale s'inscrivant dans un cône.

Avantageusement, la parcelle de surface présente une forme hélicoïdale s'enroulant autour de l'instrument.

Selon un mode de réalisation préférentiel, la parcelle de surface présente, dans un plan transversal à l'axe longitudinal, une forme concave.

Une telle forme permet notamment à l'instrument de présenter des arrêtes particulièrement saillantes, au niveau des bords de la parcelle de surface.

Selon un autre mode de réalisation possible, la parcelle de surface présente, dans un plan transversal à l'axe longitudinal, une forme convexe.

Selon une caractéristique avantageuse, au moins deux des parcelles de surface ayant les caractéristiques mentionnées ci-dessus sont juxtaposées l'une à l'autre, la limite entre les parcelles de surface formant une solution de continuité.

La solution de continuité forme l'arrête entre les deux parcelles de surfaces.

Selon un mode de réalisation préférentiel, l'instrument présente au moins un tronçon sur lesquels la totalité de la périphérie de l'instrument endodontique est constituée par les parcelles de surface ayant les caractéristiques mentionnées ci-dessus.

## Liste des figures

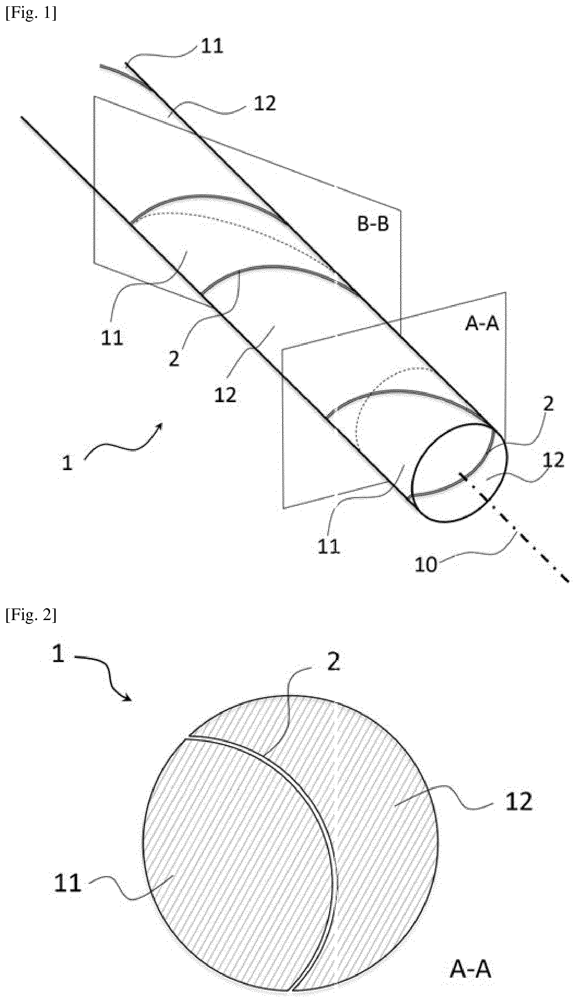

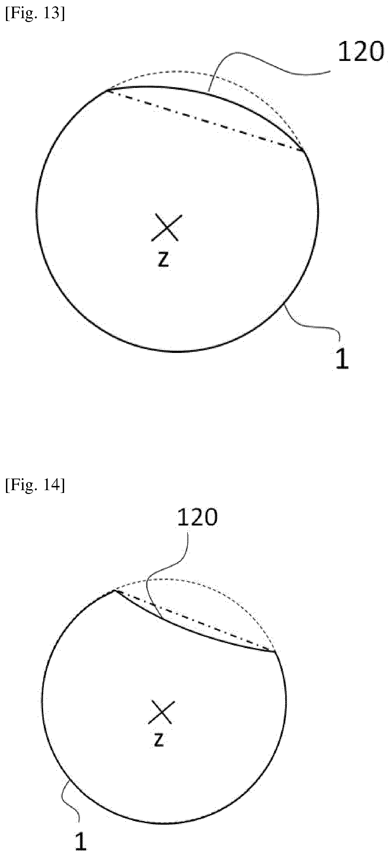

L'invention sera mieux comprise à la lecture de la description suivante de modes de réalisation préférentiels, donnée à titre de simple exemple figuratif et non limitatif, et accompagnée des figures parmi lesquelles les figures 1-12 sont des exemples pertinent pour la présente inventions et les figures 13-25 sont des exemples ne présentant pas les caractéristiques de la présente invention:

- la [Fig.1] représente une portion de barre cylindrique fendue, pouvant être utilisée pour fabriquer un instrument endodontique selon un mode de réalisation de l'invention.

- la [Fig.2] représente une section transversale de la barre de la [Fig.1].

- la [Fig.3] représente une autre section de la barre de la [Fig.1].

- la [Fig.4] représente schématiquement un procédé connu de fabrication d'instruments endodontiques par électroérosion à fil.

- la [Fig.5] représente schématiquement une variante du procédé représenté par la [Fig.4], permettant d'obtenir un instrument endodontique selon un mode de réalisation de l'invention.

- la [Fig.6] représente une portion d'un instrument endodontique selon un mode de réalisation de l'invention.

- la [Fig.7] une portion de barre cylindrique fendue, pouvant être utilisée pour fabriquer un instrument endodontique selon un autre mode de réalisation de l'invention.

- la [Fig.8] représente une section transversale d'une barre cylindrique fendue, pouvant être utilisée pour fabriquer un instrument endodontique selon un autre mode de réalisation de l'invention.

- la [Fig.9] représente une section transversale d'une barre cylindrique fendue, pouvant être utilisée pour fabriquer un instrument endodontique selon un autre mode de réalisation de l'invention.

- la [Fig.10] représente une section transversale d'une barre cylindrique fendue, pouvant être utilisée pour fabriquer un instrument endodontique selon un autre mode de réalisation de l'invention.

- la [Fig.11] représente une section transversale d'une barre cylindrique fendue, pouvant être utilisée pour fabriquer un instrument endodontique selon un autre mode de réalisation de l'invention.

- la [Fig.12] représente une section transversale d'une barre cylindrique fendue, pouvant être utilisée pour fabriquer un instrument endodontique selon un autre mode de réalisation de l'invention.

- la [Fig.13] représente une coupe transversale d'un instrument endodontique selon un mode de réalisation possible, obtenu par une variante du procédé de la [Fig.5].

- la [Fig.14] représente une coupe transversale d'un instrument endodontique selon un autre mode de réalisation possible, obtenu par une autre variante du procédé de la [Fig.5].

- la [Fig.15] représente en perspective un tronçon de la partie active d'un instrument endodontique selon un autre mode de réalisation possible, présentant quatre surfaces concaves.

- la [Fig.16] représente une coupe transversale de la partie active de l'instrument endodontique de la [Fig.15].

- la [Fig.17] représente en perspective un tronçon de la partie active d'un instrument endodontique selon un autre mode de réalisation possible, présentant quatre surfaces convexes.

- la [Fig.18] représente une coupe transversale de la partie active de l'instrument endodontique de la [Fig.17].

- la [Fig.19] représente en perspective un tronçon de la partie active d'un instrument endodontique selon un autre mode de réalisation possible, présentant quatre surfaces concaves.

- la [Fig.20] représente une coupe transversale de la partie active de l'instrument endodontique de la [Fig.19].

- la [Fig.21] représente une autre coupe transversale de la partie active de l'instrument endodontique de la [Fig.19].

- la [Fig.22] représente en perspective un tronçon de la partie active d'un instrument endodontique selon un autre mode de réalisation, présentant une section en forme de croissant de lune.

- la [Fig.23] représente une coupe transversale de la partie active de l'instrument endodontique de la [Fig.22].

- la [Fig.24] représente en perspective un tronçon de la partie active d'un instrument endodontique selon un autre mode de réalisation, présentant une surface formant un sillon.

- la [Fig.25] représente une coupe transversale de la partie active de l'instrument endodontique de la [Fig.24].

## Description détaillée

La [Fig.1] représente schématiquement une extrémité d'une barre cylindrique 1 à partir de laquelle peut être fabriqué un instrument endodontique. Cette barre cylindrique est découpée par une fente 2 traversante s'étendant sur au moins une partie de sa longueur. Les deux extrémités latérales de la fente 2 débouchent sur la surface cylindrique de la barre 1 en y formant un tracé hélicoïdal. La fente 2 sépare donc une portion de la longueur de la barre 1 en deux brins 11 et 12, qui sont enroulés l'un autour de l'autre.

Une fente, telle que décrite dans la présente description, est une découpe traversant la section transversale d'une barre ou d'un instrument, sur au moins un segment formant une partie de la longueur de celui-ci, de façon à déboucher en deux endroits sur la surface externe de cette barre, ou de cet instrument. Dans une section transversale, la fente forme, entre ses deux extrémités qui débouchent sur la surface externe de la barre ou de l'instrument, un espace de largeur sensiblement égale entre deux brins de la barre, ou de l'instrument, qu'elle sépare.

Selon l'invention, la fente 2 présente, dans un plan transversal à l'axe longitudinal de la barre 1, une forme non rectiligne. Dans la présente description, l'axe longitudinal est défini comme l'axe cylindrique à partir duquel l'instrument endodontique est formé. Cet axe longitudinal correspond généralement à l'axe de rotation de l'instrument. Plus précisément, cette fente 2 présente, dans un tel plan transversal, une forme elliptique. La [Fig.2] représente ainsi une section de la barre 1, selon un plan A-A transversal à la barre 1, c'est-à-dire perpendiculaire à l'axe 10 selon lequel s'étend la barre 1. Sur cette section, on peut voir que la fente 2 présente une forme elliptique, et divise la barre 1 en deux brins 11 et 12 de formes différentes. La surface de chacun de ces brins 11 et 12, dans ce plan transversal, peut également être différente.

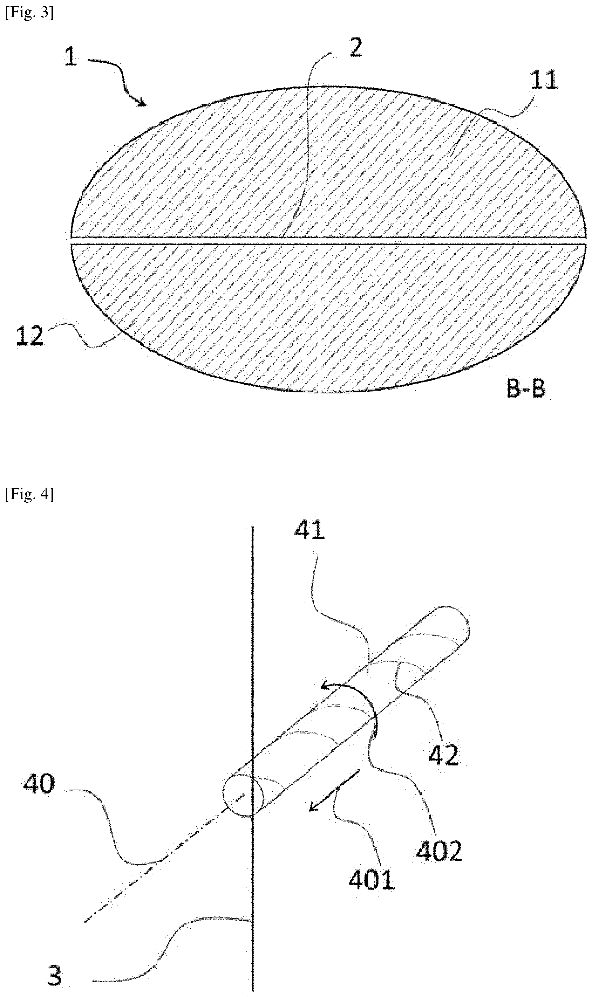

Il est à noter que cette fente 2, dont la forme est elliptique dans un plan transversal à l'axe 10, présente cependant une forme rectiligne dans un plan de coupe particulier, incliné par rapport au plan de coupe transversal. La [Fig.3] représente ainsi un exemple d'une section de la barre 1 dans un tel plan de coupe B-B, incliné par rapport au plan de coupe A-A transversal. Dans ce plan de coupe particulier, la fente 2 qui sépare les brins 11 et 12 de la barre 1 présente une forme rectiligne. Les brins 11 et 12 de la barre 1 peuvent, dans ce plan, présenter des surfaces identiques ou différentes.

La [Fig.4] représente schématiquement un procédé de découpe d'une fente 42 par un procédé d'électroérosion à fil, dans une barre 41 destinée à former un instrument endodontique fendu. Ce procédé permet notamment, de façon connue, la fabrication d'instruments endodontiques fendus tels que décrits dans le document FR2867995A1 de l'art antérieur.

Selon ce procédé, on découpe une barre 41 cylindrique pour former une barre fendue ayant une direction longitudinale correspondant à l'axe 40 de la barre 41. L'usinage est réalisé par électroérosion, à l'aide d'un fil de coupe 3 dont le diamètre est très inférieur au diamètre de la barre 41. De façon usuelle, pour la réalisation d'instruments endodontiques, ce fil de coupe 3 est maintenu dans un plan normal à l'axe de la barre 41 cylindrique.

Pour réaliser la découpe de la fente, on déplace la barre 41 par rapport au fil de coupe 3, en combinant un déplacement de la barre le long de son axe 40, comme l'indique la flèche 401, et une rotation de la barre 41 autour de son axe 40, comme l'indique la flèche 402. La découpe de la barre 41 par le fil de coupe 3 forme une fente hélicoïdale 42 s'enroulant dans la barre 41, cette fente étant rectiligne dans un plan transversal, normal à l'axe 40 de la barre 41.

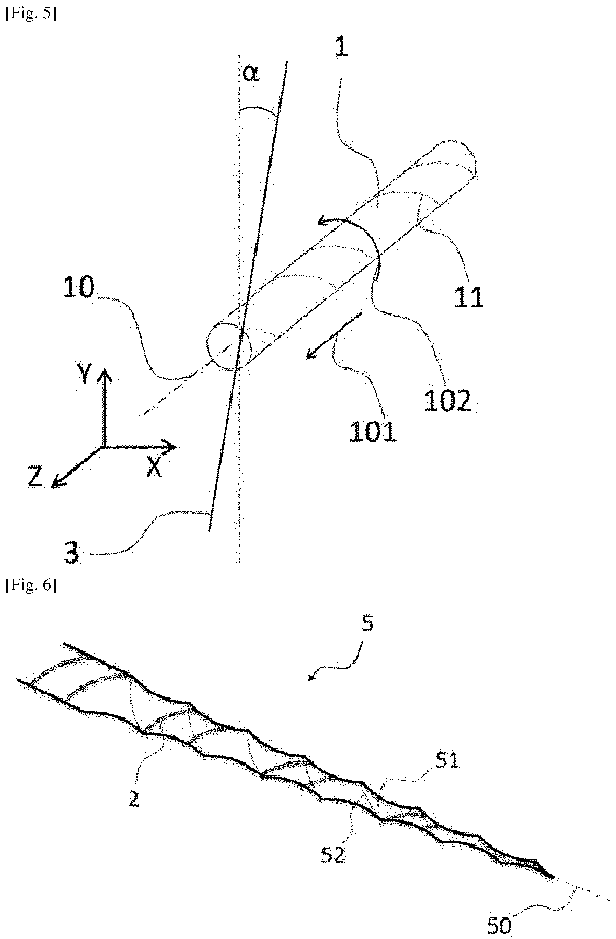

La [Fig.5] représente schématiquement un procédé de découpe d'une fente 2 par un procédé d'électroérosion à fil, dans la barre 1 destinée à former un instrument endodontique fendu selon un mode de réalisation de l'invention. Ce procédé de fabrication est une variante du procédé connu représenté par la [Fig.4], et n'est pas connu, dans l'art antérieur, pour la fabrication d'instruments endodontiques.

Selon ce procédé, on découpe la barre 1 cylindrique pour former une barre fendue ayant une direction longitudinale correspondant à l'axe 10 de la barre 1. L'usinage est réalisé par électroérosion, à l'aide d'un fil de coupe 3 dont le diamètre est très inférieur au diamètre de la barre 1. Contrairement à ce qui est réalisé usuellement, ce fil de coupe 3 est maintenu dans un plan formant un angle $\alpha$ non nul avec le plan normal à l'axe 10 de la barre 1 cylindrique.

La fente réalisée dans la barre 1 par rapport au fil de coupe 3, en combinant un déplacement de la barre le long de son axe 10, comme l'indique la flèche 101, et une rotation de la barre 1 autour de son axe 10, comme l'indique la flèche 102. La découpe de la barre 1 par le fil de coupe 3 forme une fente hélicoïdale 2 s'enroulant dans la barre 1. Selon l'invention, cette découpe n'est pas rectiligne, dans une section transversale de la barre 1. Au contraire, comme le représente la [Fig.2], elle présente une forme elliptique dans ce plan transversal.

Dans le mode de réalisation préféré de l'invention, le fil de coupe 3 d'un équipement d'électroérosion à fil constitue un instrument de découpe linéaire. Selon d'autres modes de réalisation possibles, cependant, cet instrument de découpe linéaire peut être constitué par un autre moyen de découpe, tel que par exemple un fil diamanté permettant le sciage de la barre 1. Par ailleurs, même si le procédé des figures 4 et 5 montre un déplacement des barres 4 et 1 par rapport au fil de coupe 3, ce déplacement est bien sûr un déplacement relatif. Il est donc possible, dans d'autres modes de réalisation, que le fil de coupe se déplace par rapport à une barre immobile. Selon d'autres modes de réalisation, une rotation de la barre peut être conjuguée au déplacement du fil de coupe.

La barre 1 représentée par les figures 1 à 3, qui présente une forme externe cylindrique, peut être découpée ou usinée, avant ou après la découpe dans cette barre de la fente 2. Ainsi, la [Fig.6] représente un exemple d'une portion d'instrument endodontique 5, dont les faces externes ont été usinées en hélice, avec des parcelles de surface 51 séparées par des arêtes 52 pour présenter une forme de foret, classique pour des instruments endodontiques. Cet instrument endodontique 5 est également découpé, sur au moins la portion de sa longueur qui est visible sur la [Fig.5], par une fente 2 du même type que celle qui est représentée par les figures 1 à 3. Ainsi, dans une section de l'instrument 5 selon un plan transversal à l'axe 50 selon lequel s'étend cet instrument 5, la fente 2 présente une forme non rectiligne, s'apparentant à une ellipse. Il est à noter que la fente 2 peut être découpée dans l'instrument 5, par exemple selon le procédé représenté par la [Fig.5], avant ou après l'usinage ou la découpe des faces externes de l'instrument 5.

Les techniques de découpe par des instruments de découpe linéaire, par exemple par électroérosion à fil, présentent l'originalité de ne former, par construction, que des surfaces réglées. Une surface réglée est définie, en géométrie, comme une surface par chaque point de laquelle passe une droite, appelée génératrice, contenue dans la surface.

Le procédé de découpe selon la présente invention, dont un mode de réalisation est représenté par la [Fig.5], forme sur chaque brin d'un instrument endodontique, s'étendant le long d'un axe longitudinal, une parcelle de surface s'inscrivant dans une surface réglée dont :

- une génératrice unique passe par chaque point,
- les génératrices ne s'inscrivent dans aucun plan orthogonal à l'axe longitudinal,
- les génératrices ne sont pas parallèles à l'axe longitudinal,
- les génératrices ne sont pas toutes parallèles entre elles.

Il est par la suite décrit la forme des surfaces obtenues, sur chaque brin d'une barre cylindrique, par une découpe d'une fente par électroérosion à fil selon un mode de réalisation de l'invention.

On considère en particulier le cas où l'axe longitudinal de la barre cylindrique à découper, de rayon R, et le fil d'électroérosion ne sont pas perpendiculaires, et que le fil d'électroérosion est constamment à un angle $\alpha$ par rapport à la perpendiculaire à l'axe longitudinal de la barre, à une distance r de l'axe longitudinal de la barre qui est constante et inférieure à R.

Un repère othonormé est placé fixe sur la barre comprenant un axe Z coïncidant avec l'axe longitudinal de la barre, et des axes X et Y perpendiculaires à cet axe Z. Le fil d'éléctroérosion se déplacera donc dans ce repère, pour représenter les mouvements relatifs de la barre et du fil d'électroérosion. Naturellement, ce choix de repère ne préjuge pas des mouvements réels des composants. Il est en effet possible, et même plus courant, que le fil d'électroérosion soit immobile et que la barre se déplace par rapport à ce fil.

Le fil d'électroérosion est considéré, pour cette analyse, comme une ligne abstraite infiniment fine. En pratique le fil n'est bien sûr pas infiniment fin mais peut être représenté par un cylindre qui s'étend même au-delà de sa matière métallique, car le fil agit par un arc électrique qui entoure le fil. On peut donc considérer le fil comme usinant dans un cylindre fin qui entoure le fil, l'électricité enlevant tout ce qui est à l'intérieur de ce cylindre.

Ce cylindre virtuel du fil enlève une partie de la barre en laissant une surface réglée. C'est la ligne extérieure du cylindre parallèle à son axe central et la plus proche de l'axe central de la barre qui détermine la génératrice de la surface réglée.

On peut considérer que le fil laisse une surface réglée sur la surface de chacun des brins de la barre, dont les deux extrémités sont des courbes hélicoïdales. Chacune de ces deux courbes définit un point en fonction d'un paramètre t. Chacune des droites génératrices de la surface réglée passe par les points de chacune des deux courbes qui sont définies par la même valeur du paramètre.

Dans le repère orthonormé défini plus haut, la surface peut donc être définie par :

- une première courbe : $h_1(t) = (x_1(t), y_1(t), z_1(t))$, et
- une deuxième courbe : $h_2(t) = (x_2(t), y_2(t), z_2(t))$.

Dans la mesure où, selon l'invention, les génératrices des surfaces réglées ne sont pas orthogonales à l'axe longitudinal, ces courbes respectent la condition $z_1(t) \neq z_2(t)$. En effet, pour chaque valeur de t, les points de la courbe définissant la génératrice n'ont pas la même position sur l'axe z.

Plus précisément, ces courbes hélicoïdales peuvent être définies par les équations :

$$h_1(t) = (R \cos(t), R \sin(t), A\,t)$$

$$h_2(t) = (R \cos(t + \Phi), R \sin(t + \Phi), A\,t + H)$$

Ces équations découlent de l'équation générale des courbes hélicoïdales :

$$h_3(t) = (R \cos(V\,t + \Phi), r \sin(V\,t + \Phi), A\,t + H)$$

dans laquelle on a

- le rayon R de la barre,
- V qui correspond à la vitesse de rotation,

- $\Phi$ une constante de « phase » (correspondant à un angle pour t=0)
- A correspond à une vitesse d'avancée
- H une « avancée initiale en z ».

D'une manière générale, l'ensemble des points sur la ligne entre deux points fixes $(x_1, y_1, z_1)$ et $(x_2, y_2, z_2)$ est l'ensemble des triplets :

$$\{(\alpha\, x_1 + (1-\alpha)x_2,\; \alpha\, y_1 + (1-\alpha)y_2,\; \alpha\, z_1 + (1-\alpha)z_2)\ \text{tel que}\ 0 \le \alpha \le 1\}$$

Une surface réglée S pouvant être définie par deux courbes paramétrées $h_1$ et $h_2$, alors l'ensemble des points de cette courbe est une surface paramétrée avec deux paramètres $\alpha$ et t.

$$S(t,\alpha) = \alpha\, h_1(t) + (1-\alpha)h_2(t)$$

Pour l'ensemble des points situés entre les deux courbes, on a $0 \le \alpha \le 1$.

Pour définir la forme du profil de cette surface réglée dans une section transversale de la barre, on peut chercher les coordonnées des points de la surface pour une valeur de z donnée. Pour effectuer ce calcul, on supposera que z=0 et que R=1.

L'équation définissant les points devient :

$$(X, Y, 0) = (\,\alpha\cos(t) + (1-\alpha)(\cos(t + \Phi)),\ \alpha\sin(t) + (1-\alpha)\sin(t + \Phi),\ \alpha\, t + (1-\alpha)(A\,t + H))$$

Autrement dit,

$$X = \alpha\cos(t) + (1-\alpha)\cos(t + \Phi))\ \text{— égalité de la première coordonnée}$$

$$Y = \alpha\sin(t) + (1-\alpha)\sin(t + \Phi))\ \text{— égalité de la deuxième coordonnée}$$

$$0 = \alpha\, t + (1-\alpha)(A\,t + H)\ \text{— égalité de la troisième coordonnée}$$

Les termes en t peuvent être isolés en plusieurs étapes :

$$0 = \alpha\, t + (A\,t + H) - \alpha(A\,t + H)\ \text{(étape 1)}$$

$$0 = t(\alpha + A - \alpha A) + H(1 - \alpha)$$

Ceci donne un rapport entre t et $\alpha$, $t = H(\alpha - 1) / (\alpha - (\alpha - 1)A)$.

On peut utiliser cette équation dans les formules pour X et Y, ce qui donne :

$$X(\alpha) = \alpha\cos(H(\alpha - 1) / (\alpha - (\alpha - 1)A)) + (1-\alpha)\cos(\Phi + H(\alpha - 1)/(\alpha - (\alpha - 1)A))$$

$$Y(\alpha) = \alpha\sin(H(\alpha - 1) / (\alpha - (\alpha - 1)A)) + (1-\alpha)\sin(\Phi + H(\alpha - 1)/(\alpha - (\alpha - 1)A))$$

Chacune des parcelle de surface bordant la fente 2 représentée par la [Fig.2] dans la section transversale d'une barre 1 est ainsi définie par deux surfaces réglées, correspondant à un choix des valeurs des paramètres A, $\Phi$ et H. En fonction de ces paramètres, la forme de ces surfaces peut être concave ou convexe. Il est donc possible, avec le procédé de l'invention, de découper des fentes présentant des formes variées dans des instruments endodontiques.

Il est à noter que la fente selon l'invention peut découper la section transversale de l'instrument en deux portions qui peuvent avoir des sections de surfaces égales ou inégales. Cette surface de la section de chacun des brins est d'ailleurs indépendante du fait que la fente découpe sur les brins une surface concave ou convexe.

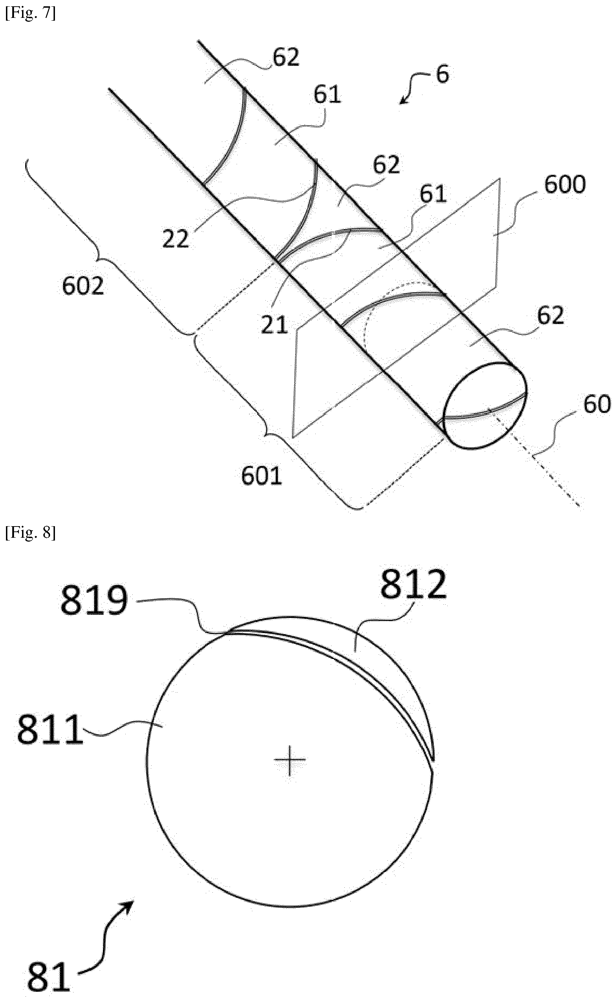

Ainsi, la [Fig.8] représente un exemple de section transversale d'un instrument endodontique selon un mode de réalisation de l'invention, dans lequel une barre 81 est découpée en deux brins 811 et 812 par une fente 819 de forme courbe. Dans ce mode de réalisation, la section transversale du brin 811 présente une surface beaucoup plus importante que la section transversale du brin 812. La fente 819 définit une surface convexe pour le brin 811 et une surface concave pour le brin 812. Dans ce mode de réalisation, les bords du brin 812, le long de la fente 819, forment des arêtes très aiguës.

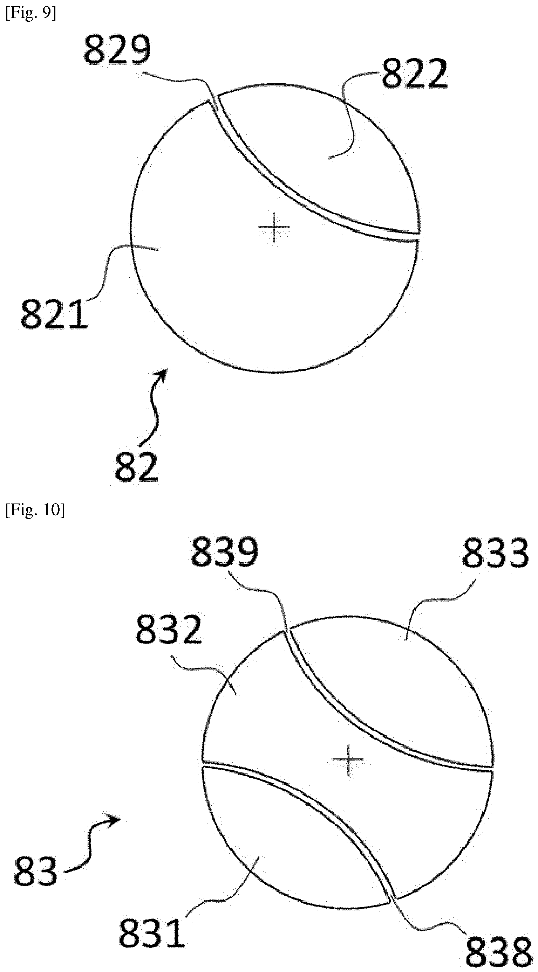

La [Fig.9] représente une section transversale d'un instrument endodontique selon un mode de réalisation de l'invention, dans lequel une barre 82 est découpée en deux brins 821 et 822 par une fente 829 de forme courbe. Dans ce mode de réalisation, la section transversale du brin 821 présente une surface beaucoup plus importante que la section transversale du brin 822. Pourtant, la fente 829 définit une surface convexe pour le brin 822 et une surface concave pour le brin 821.

Dans d'autres modes de réalisation de l'invention, il est possible de réaliser sur un même instrument ou sur une même barre plusieurs fentes selon l'invention, s'étendant sur une même portion de l'instrument ou de la barre.

Ainsi, la [Fig.10] représente un exemple d'une section transversale d'une barre 83, dans laquelle sont découpées deux fentes 838 et 839, qui sont chacune de forme courbe, selon un mode de réalisation de l'invention. Ces deux fentes 838 et 839 définissent dans la barre 83 trois brins distincts, qui s'enroulent les uns autour des autres en spirale. Ainsi, la fente 838 sépare un brin latéral 831 du brin central 832, et la fente 839 sépare ce brin central 832 d'un second brin latéral 833. Dans ce mode de réalisation, les fentes 838 et 839 forment, de part et d'autre du brin central 832, des surfaces concaves.

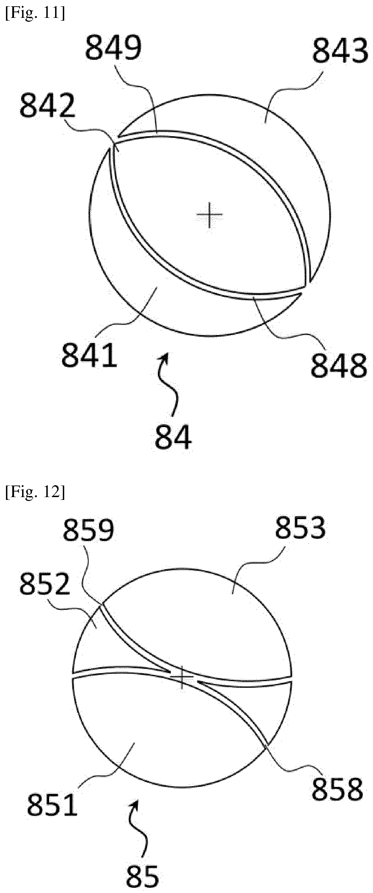

Dans un autre mode de réalisation représenté par la [Fig.11], une barre 84 est découpée par deux fentes 848 et 849, qui sont chacune de forme courbe, selon un mode de réalisation de l'invention. Ces fentes définissent dans cette barre 84 trois brins distincts, qui s'enroulent les uns autour des autres en spirale. La fente 848 sépare ainsi un premier brin latéral 841 d'un brin central 842, et la fente 849 sépare ce brin central 842 d'un second brin latéral 843. Dans ce mode de réalisation, les fentes 848 et 849 forment chacune une surface convexe sur le brin central 842 et sont placées de telle sorte que les brins latéraux 841 et 843 forment la totalité de la surface périphérique de la barre 84.

Dans une variante de ce mode de réalisation, il peut être imaginé que le brin central 842 de cet instrument soit découpé pour être retiré, afin de former un instrument ne présentant que les brins latéraux 841 et 843. Ces brins latéraux seraient alors séparés par un espace présentant une section de forme ovale, au centre de la barre 84.

Dans encore un autre mode de réalisation représenté par la [Fig.12], une barre 85 est découpée par deux fentes 858 et 859, qui sont chacune de forme courbe, selon un mode de réalisation de l'invention. Ces fentes présentent une configuration telle qu'elles se rejoignent au centre de la section de la barre 85. Ces deux fentes séparent ainsi l'instrument en quatre brins distincts : un premier brin latéral 851 est séparé, par la fente 858, de deux brins centraux 852, et ces deux brins centraux 852 sont eux-mêmes séparés par la fente 859 d'un second brin latéral 853. Les deux brins centraux 852 sont eux-mêmes séparés l'un de l'autre par la jonction des fentes 858 et 859.

Il est à noter que la forme des sections transversales d'un instrument peut être variable le long de la longueur de cet instrument. Ainsi, un même instrument peut être divisé en trois brins, comme le représente la section de la [Fig.10], sur une partie de sa longueur, et en quatre brins, comme le représente la section de la [Fig.12], sur une autre partie de sa longueur.

De façon plus générale, les fentes s'étendant, selon l'invention, sur au moins une partie de l'instrument endodontique peuvent présenter une forme variable le long de cet instrument endodontique. Ainsi, la [Fig.7] représente un exemple d'une barre 6 s'étendant le long d'un axe 60, qui est découpée par une fente selon l'invention présentant une forme non rectiligne, dans un plan orthogonal à l'axe 60, par exemple le plan 600. Cette fente découpe la barre 6 en deux brins 61 et 62. Cependant, cette fente présente des formes différentes le long de la barre 6. Sur un premier segment 601 de la barre 6, une portion 21 de cette fente s'enroule en spirale dans un premier sens autour de l'instrument. Sur un second segment 602, une portion 22 de cette fente s'enroule en spirale dans un sens opposé. Une telle modification des caractéristiques géométriques de la fente, le long d'un même instrument, peut être obtenue selon le procédé représenté par la [Fig.5], en faisant varier le sens de rotation de la barre et/ou la position angulaire du fil de coupe 3, ou plus généralement de l'instrument de découpe linéaire, au cours de l'avancée de la barre le long de l'axe longitudinal Z.

De la même façon, de nombreuses variantes de formes de la fente selon l'invention sont possibles. Cette fente peut présenter un pas constant le long de la barre ou de l'instrument, ou au contraire un pas variable. Elle peut présenter également une forme d'ellipse plus ou moins prononcée selon sa position sur l'instrument ou la barre.

Il est également possible de réaliser un instrument endodontique présentant une fente s'étendant sur sa longueur, cette fente présentant, sur certains tronçons de l'instruments, une forme linéaire non rectiligne dans une section perpendiculaire à l'axe longitudinal de l'instrument et, sur d'autres tronçons, une forme linéaire rectiligne dans une section perpendiculaire à l'axe longitudinal de l'instrument.

La présente description montre des instruments endodontiques présentant des fentes sur au moins une partie de leur longueur, ces fentes présentant une forme non rectiligne, dans un plan transversal à l'axe longitudinal de l'instrument. Il est à noter que le procédé de découpe de telles fentes pourrait également être mis en œuvre sur d'autres instruments formés à partir d'une tige longitudinale. Chacune des caractéristiques présentées ci-dessus en lien avec un instrument endodontique, pourrait ainsi être mise en œuvre avantageusement dans tout type d'instrument autre qu'un instrument endodontique.

Les figures 13 à 25 montrent des instruments endodontiques dont des faces sont obtenues par un procédé semblable à celui représenté par la [Fig.5], selon lequel on usine par électroérosion la barre 1 à l'aide du fil de coupe 3, qui est maintenu dans un plan formant un angle α non nul avec le plan normal à l'axe z de de la barre 1 cylindrique. Lors de cet usinage, l'axe z de la barre 1 est placé à une distance du fil de coupe 3 qui est inférieure au rayon de la barre 1. La barre 1 est alors déplacée le long de son axe z pour entrer en contact avec le fil de coupe 3, de telle sorte que celui-ci découpe la barre 1. Ce déplacement de la barre 1 le long de l'axe z est combiné avec une rotation θ de la barre 1 autour de son axe z.

La découpe de la barre 1 obtenue par cet usinage forme une face hélicoïdale 120 s'enroulant autour de la barre 1.

Les figures 13 et 14 sont des sections, dans des plans transversaux, normaux à l'axe z, des barres 1 dans lesquelles ont été réalisés de tels usinages de faces hélicoïdales 120. Les valeurs des paramètres du déplacement relatif de la barre 1 par rapport au fil de coupe 3, et notamment les paramètres combinés de déplacement de la barre 1 le long de l'axe z et de rotation de la barre 1 autour de cet axe z, sont choisis de façons différentes pour réaliser la barre 1 de la [Fig.13] et la barre 1 de la [Fig.14].

Comme le montrent ces figures 13 et 14, ces usinages permettent d'obtenir des faces hélicoïdales 120 qui, en section transversale, ne sont pas rectilignes. Au contraire, dans le cas représenté par la [Fig.13], la face hélicoïdale 120 de la barre 1 présente, en section transversale, un profil convexe. Dans le cas représenté par la [Fig.14], la face hélicoïdale 120 de la barre 1 présente, en section transversale, un profil concave.

Un tel usinage de barre résulte du choix de paramètres d'usinage qui étaient connus en eux-mêmes. Il est cependant apparu que la combinaison spécifique de ces paramètres pour usiner des pièces cylindriques en y formant des faces hélicoïdales ayant un profil non rectiligne en section transversale n'était pas connue. Ainsi, alors qu'il est connu de réaliser des instruments endodontiques de formes variées à l'aide de techniques d'usinage par électroérosion à fil, il n'est pas connu d'utiliser l'électroérosion à fil pour réaliser de tels instruments ayant des faces hélicoïdales, s'enroulant autour de l'instrument, dont le profil est non rectiligne en section transversale.

Les techniques d'usinage par électroérosion à fil présentent l'originalité de ne former, par construction, que des surfaces réglées. Une surface réglée est définie, en géométrie, comme une surface par chaque point de laquelle passe une droite, appelée génératrice, contenue dans la surface.

De façon habituelle, les instruments endodontiques peuvent présenter un certain nombre de surfaces réglées particulières. Ils peuvent ainsi présenter :

- des faces planes, qui sont des surfaces réglées dans lesquelles une infinité de génératrices passent par chaque point de la surface,
- des faces coniques, qui sont des surfaces réglées dans lesquelles toutes les génératrices passent par un point commun, qui est le sommet du cône,
- des faces cylindriques, qui sont des surfaces réglées dans lesquelles toutes les génératrices sont parallèles entre elles.

Les instruments endodontiques connus qui sont fabriqués par les procédés usuels d'usinage par électroérosion à fil peuvent également présenter des surfaces réglées hélicoïdales, dans lesquelles les génératrices sont orthogonales à l'axe longitudinal de l'instrument. De telles surfaces, qui sont communes sur les instruments endodontiques fabriqués par les procédés d'usinage par électroérosion à fil, ne sont en revanche pas présentes sur les instruments endodontiques formés par d'autres techniques, par exemple par meulage. Il est en effet très difficile d'obtenir une surface réglée, en dehors des surfaces réglées particulières planes, coniques ou cylindriques, avec un procédé d'usinage ne mettant pas en œuvre de surface de coupe linéaire rectiligne.

De façon étonnante, les inventeurs n'ont identifié aucun exemple d'instrument endodontique, s'étendant le long d'un axe longitudinal, et présentant au moins une parcelle de surface s'inscrivant dans une surface réglée dont :

- une génératrice unique passe par chaque point (ce qui exclue les surfaces planes et les surfaces coniques),
- les génératrices ne s'inscrivent dans aucun plan orthogonal à l'axe longitudinal,
- les génératrices ne sont pas parallèles à l'axe longitudinal,
- les génératrices ne sont pas toutes parallèles entre elles.

Pourtant, il est apparu aux inventeurs que la réalisation d'instruments endodontiques présentant de telles parcelles de surface pouvait présenter de grands avantages. Elle permet ainsi, en utilisant des procédés de fabrication très simples, d'obtenir une très grande variété de formes d'instruments endodontiques.

La présente description concerne ainsi des instruments endodontiques s'étendant le long d'un axe longitudinal. Très généralement, cet axe longitudinal est l'axe de la forme cylindrique à partir de laquelle l'instrument endodontique est formé. En général, il correspond sensiblement à l'axe de rotation de l'instrument, lors de son utilisation, et à l'axe principal d'inertie autour duquel le moment d'inertie de l'instrument endodontique est le plus faible. Lors de l'utilisation de l'instrument endodontique, celui-ci est souvent déformé, notamment pour s'introduire dans un canal radiculaire non rectiligne, de telle sorte qu'il ne s'étend plus le long d'un axe rectiligne. Par extension, on considère cependant comme axe longitudinal de l'instrument l'axe de rotation de chaque portion de l'instrument, qui correspond généralement sensiblement à l'axe principal d'inertie autour duquel le moment d'inertie de cette portion de l'instrument endodontique est le plus faible.

La surface d'un instrument endodontique se décompose généralement en plusieurs parcelles de surface. Certaines de ces parcelles de surface forment le manche, par lequel l'instrument est saisi et entraîné en mouvement, par le dentiste ou par un instrument pouvant par exemple l'entraîner en rotation. Ces parcelles de surface du manche présentent souvent la forme cylindrique de la barre à partir de laquelle est fabriqué l'instrument, ou d'un manche rapporté.

D'autres parcelles de surface forment la portion active de l'instrument, qui est destinée à être introduite dans un canal radiculaire. Cette portion active se décompose avantageusement en plusieurs parcelles de surface, chacune de ces parcelles de surface étant dépourvue de solution de continuité. Ces différentes parcelles de surface sont de préférence séparées les unes des autres par des solutions de continuité. Ces solutions de continuité entre plusieurs parcelles de surface forment souvent des arêtes saillantes qui sont utilisées pour réaliser des usinages ou des grattages sur la surface du canal radiculaire.

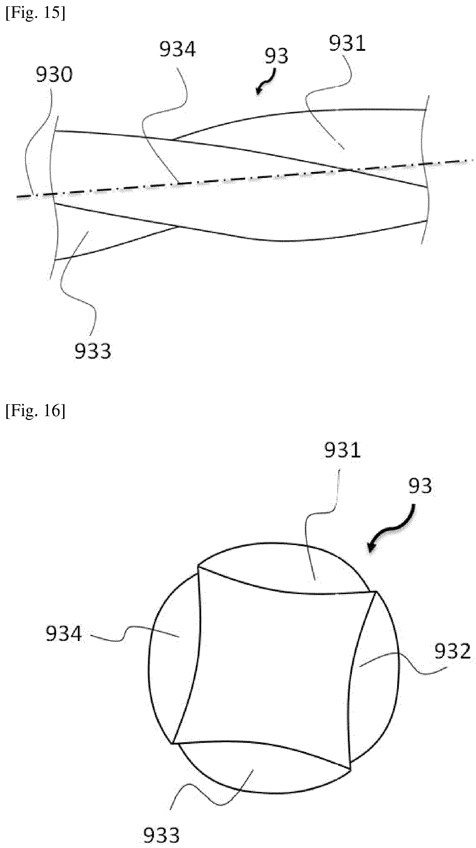

Les figures 15 et 16 représentent, respectivement en perspective et en vue de coupe selon un plan transversal à l'axe longitudinal 930, un tronçon 93 de la partie active d'un instrument endodontique dans lequel sont formées quatre parcelles de surface 931, 932, 933 et 934. Ces quatre parcelles de surface 931, 932, 933 et 934 sont identiques les unes aux autres, et s'enroulent en hélice le long du tronçon 93.

Chacune de ces parcelles de surfaces 931, 932, 933 et 934 est fabriquée selon le procédé décrit ci-dessus en lien avec la [Fig.5], de telle sorte que, dans une section transversale à l'axe longitudinal 930 du tronçon 93, ces parcelles de surfaces 931, 932, 933 et 934 ne présentent pas un profil rectiligne, mais au contraire concave. Les parcelles de surface 931, 932, 933 et 934 présentent donc des formes d'hélices concaves enroulées autour du tronçon 93.

Les jonctions entre deux de ces parcelles de surfaces 931, 932, 933 et 934 voisines forment des solutions de continuité correspondant aux arêtes du tronçon 93 de l'instrument endodontique. Du fait des formes concaves des parcelles de surface 931, 932, 933 et 934, ces arêtes présentent des formes bien plus saillantes et acérées que les arêtes d'un instrument de section carrée.

La forme d'instrument selon ce mode de réalisation permet donc, de façon avantageuse, d'obtenir un instrument dont les arêtes sont plus saillantes.

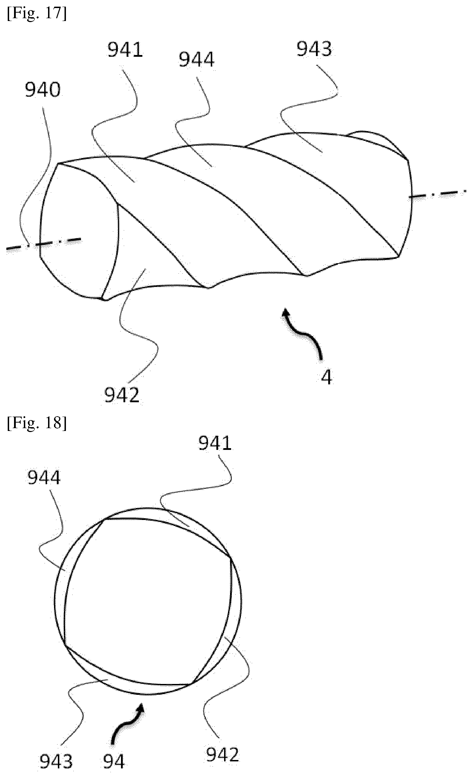

Les figures 17 et 18 représentent, respectivement en perspective et en vue de coupe selon un plan transversal à l'axe longitudinal 940, un tronçon 94 de la partie active d'un instrument endodontique dans lequel sont formées quatre parcelles de surface 941, 942, 943 et 944. Ces quatre parcelles de surface 941, 942, 943 et 944 sont identiques les unes aux autres, et s'enroulent en hélice le long du tronçon 94.

Chacune de ces parcelles de surfaces 941, 942, 943 et 944 est fabriquée selon le procédé décrit ci-dessus en lien avec la [Fig.5], de telle sorte que, dans une section transversale à l'axe longitudinal 940 du tronçon 94, ces parcelles de surfaces 941, 942, 943 et 944 ne présentent pas un profil rectiligne, mais au contraire convexe. Les parcelles de surface 941, 942, 943 et 944 présentent donc des formes d'hélices convexes enroulées autour du tronçon 94.

Les jonctions entre deux de ces parcelles de surfaces 941, 942, 943 et 944 voisines forment des solutions de continuité correspondant aux arêtes du tronçon 94 de l'instrument endodontique. Du fait des formes convexes des parcelles de surface 941, 942, 943 et 944, ces arêtes présentent des formes bien moins saillantes et acérées que les arêtes d'un instrument de section carrée.

La forme d'instrument selon ce mode de réalisation permet donc d'obtenir un instrument dont, sur au moins un tronçon, les arêtes sont moins saillantes.

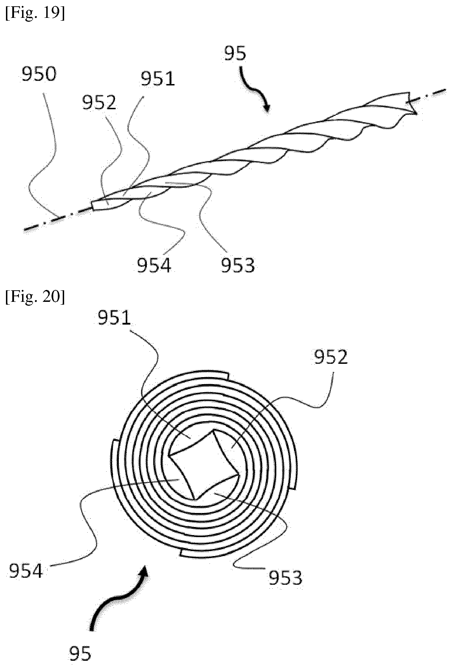

Les figures 19 à 21 représentent, respectivement en perspective et selon deux vues de coupe selon des plans transversaux à l'axe longitudinal 950, le tronçon 95 d'un instrument endodontique dans lequel sont formées quatre parcelles de surface 951, 952, 953 et 954. Ces quatre parcelles de surface 951, 952, 953 et 954 sont identiques les unes aux autres, et s'enroulent en hélice le long de la partie active représentée par le tronçon 95.

Chacune de ces parcelles de surface est fabriquée selon le procédé décrit ci-dessus en lien avec la [Fig.5], de telle sorte que, dans une section transversale à l'axe longitudinal 950 de la partie active du tronçon 95, ces parcelles de surface ne présentent pas un profil rectiligne, mais au contraire concave, comme dans le tronçon 93 représenté par les figures 15 et 16. Les parcelles de surface 951, 952, 953 et 954 présentent donc des formes d'hélices concaves enroulées autour du tronçon 95.

Dans ce mode de réalisation, comme dans le tronçon 93 représenté par les figures 15 et 16, les génératrices des parcelles de surface 951, 952, 953 et 954 sont, dans une même section transversale, situées à la même distance de l'axe longitudinal 950. Cependant, contrairement au tronçon représenté par les figures 15 et 16, les distances entre les génératrices des parcelles de surface 951, 952, 953 et 954 et l'axe longitudinal 950 ne sont pas constantes le long de l'axe longitudinal, mais, au contraire, varient de façon continue le long de cet axe longitudinal.

La forme de la partie active du tronçon 95 s'inscrit donc avantageusement dans une forme conique, qui peut avantageusement se terminer par une pointe. Une telle forme peut être réalisée très facilement par usinage par électroérosion à fil en faisant varier progressivement la distance entre le fil d'usinage et l'axe longitudinal de l'instrument, au cours de l'usinage de chacune des parcelles de surface 951, 952, 953 et 954.

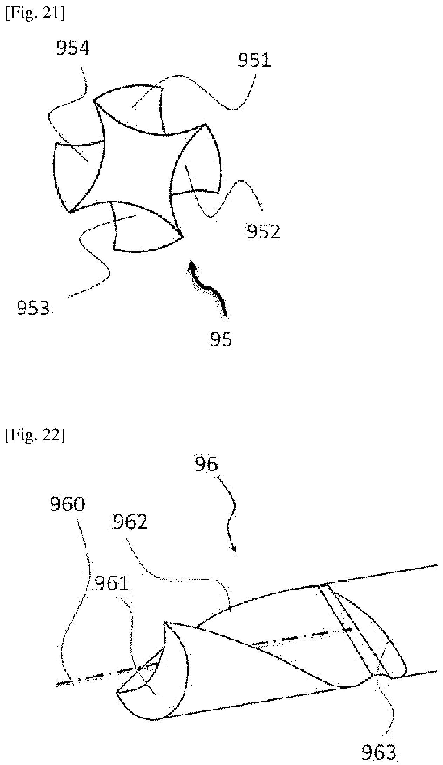

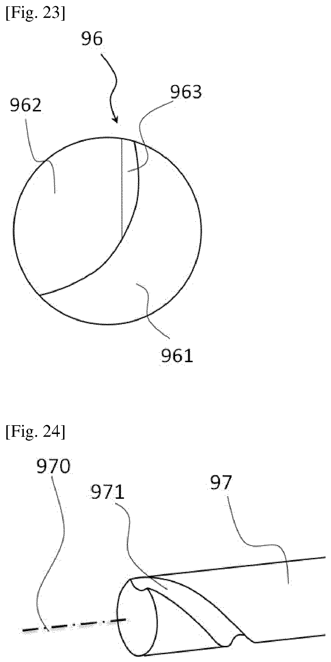

Les figures 22 et 23 représentent, respectivement en perspective et selon deux vues de coupe selon des plans transversaux à l'axe longitudinal, un tronçon 96 d'un instrument endodontique selon un autre mode de réalisation, présentant un tronçon d'extrémité 961, une parcelle de surface réglée 962 qui s'enroule en hélice le long d'une partie du tronçon d'extrémité 961, et une surface de jonction 963.

La parcelle de surface réglée 962 est fabriquée selon le procédé décrit ci-dessus en lien avec la [Fig.5], de telle sorte que, dans une section transversale à l'axe longitudinal 960 du tronçon 96, cette parcelle de surface 962 présente un profil très fortement concave et de grande profondeur, donnant au tronçon 96 une forme en croissant de lune. Cette parcelle de surface 962 présente donc une forme d'hélice très concave enroulée autour du tronçon 96. Il est à noter que la profondeur de la concavité générée par l'usinage est telle que l'axe longitudinal 960 lui-même est situé en dehors du tronçon 96, sur une partie de ce tronçon.

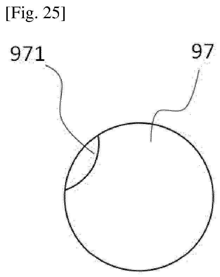

Les figures 24 et 25 représentent, respectivement en perspective et en vue de coupe selon un plan transversal à l'axe longitudinal, un tronçon 97 de la partie active d'un instrument endodontique selon un autre mode de réalisation, dans lequel une parcelle de surface réglée 971, s'étendant en hélice le long de la surface cylindrique du tronçon 97, est formé par une parcelle de surface réglée 971 qui s'enroule en hélice le long de ce tronçon 97.

La parcelle de surface réglée 971 est fabriquée selon le procédé décrit ci-dessus en lien avec la [Fig.5], de telle sorte que, dans une section transversale à l'axe longitudinal 970 du tronçon 97, cette parcelle de surface 971 présente un profil très fortement concave mais de faible profondeur, donnant au tronçon 97 une forme présentant un léger sillon. Cette parcelle de surface 971 présente donc une forme d'hélice à sillon de faible profondeur enroulée autour du tronçon 97.

Il est à noter que la portion active d'un instrument endodontique selon les exemples présenté peut avantageusement présenter des tronçons ayant des caractéristiques différentes. Il est par exemple possible que la portion active d'un même instrument endodontique présente un tronçon semblable au tronçon 93 décrit ci-dessus, et un autre tronçon semblable au tronçon 94 décrit ci-dessus. Une telle combinaison de tronçons peut par exemple permettre à un même instrument d'effectuer un usinage efficace à certaines profondeurs d'un canal radiculaire, tout en réduisant les risques de coincement de l'instrument à d'autres profondeurs de ce canal.

De façon générale, un instrument selon les procédés de fabrication décrits ci-dessus peut présenter une très grande variété de parcelles de surfaces de formes variées, au moins certaines de ces parcelles de surface présentant la forme de surfaces réglées telles que décrites ci-dessus, dont une génératrice unique passe par chaque point, les génératrices ne s'inscrivent dans aucun plan orthogonal à l'axe longitudinal, les génératrices ne sont pas parallèles à l'axe longitudinal, et les génératrices ne sont pas toutes parallèles entre elles.

Dans de nombreux cas, comme dans les exemples représentés dans la présente demande, les parcelles de surface réglées présentent chacune des génératrices qui forment un angle constant, en valeur absolue, avec les plans orthogonaux à l'axe longitudinal, et la position angulaire de ces génératrices varie de façon régulière le long de l'axe longitudinal de l'instrument. Ces caractéristiques permettent avantageusement de simplifier la fabrication des instruments, en minimisant les variations des paramètres d'usinage. Ainsi, les surfaces dont les génératrices forment un angle constant, en valeur absolue, avec les plans orthogonaux à l'axe longitudinal, sont obtenues par usinage par électroérosion à fil en déplaçant une barre en translation, le long de son axe longitudinal ou dans une direction perpendiculaire à cet axe longitudinal, ou par rotation autour de cet axe longitudinal, l'angle du fil de coupe par rapport à l'axe longitudinal restant constant.

Il est cependant bien sûr possible d'obtenir des surfaces bien plus variées, pouvant par exemple répondre à des besoins spécifiques des instruments endodontiques, en réalisant des surfaces réglées présentant des caractéristiques différentes.

Il est donc possible, avec le procédé décrit, de fabriquer des instruments endodontiques présentant des surfaces de formes variées.

## Revendications

**1.** Instrument endodontique s'étendant le long d'un axe longitudinal (50), ledit instrument présentant au moins une fente (2) longitudinale, sur au moins une partie de sa longueur, séparant l'instrument en plusieurs brins (51, 52) distincts, ladite fente (2) présentant, dans une section perpendiculaire audit axe longitudinal (50), une forme linéaire non rectiligne, ladite fente (2) formant, sur chacun desdits brins (51, 52) dudit instrument endodontique, une parcelle de surface s'inscrivant dans une surface réglée dont :

- une génératrice unique passe par chaque point,
- les génératrices ne s'inscrivent dans aucun plan orthogonal à l'axe longitudinal (50),
- les génératrices ne sont pas parallèles à l'axe longitudinal (50), et
- les génératrices ne sont pas toutes parallèles entre elles.

**2.** Instrument endodontique selon la revendication 1, **caractérisé en ce que** chacune desdites parcelles de surface présente une forme hélicoïdale s'enroulant autour de l'axe longitudinal (50) dudit instrument.

**3.** Instrument endodontique selon l'une quelconque des revendications précédentes, **caractérisé en ce que** ladite fente (2) présente des caractéristiques géométriques différentes sur différentes sections voisines de l'instrument.

**4.** Instrument endodontique selon l'une quelconque des revendications précédentes, **caractérisé en ce qu'**il présente au moins deux fentes (838, 839, 848, 849, 858, 859) longitudinales, sur au moins une partie de sa longueur, au moins l'une desdites fentes présentant, dans une section perpendiculaire audit axe longitudinal, une forme linéaire non rectiligne.

**5.** Instrument endodontique selon la revendication précédente, **caractérisé en ce que** au moins deux desdites fentes (848, 849, 858, 859) se rejoignent, dans au moins certaines des sections de l'instrument.

**6.** Procédé de fabrication d'un instrument endodontique selon l'une quelconque des revendications précédentes, s'étendant le long d'un axe longitudinal (50), ledit procédé comprenant une étape de découpe d'une fente (2) longitudinale, sur au moins une partie de la longueur dudit instrument, ladite découpe étant effectuée par un instrument de découpe linéaire non orthogonal audit axe longitudinal (50), ladite découpe étant obtenue par un déplacement dudit instrument, par rapport audit instrument de découpe linéaire, ledit déplacement combinant au moins une translation dudit instrument le long dudit axe longitudinal (50) et une rotation dudit instrument autour dudit axe longitudinal (50).

**7.** Procédé de fabrication selon la revendication précédente, **caractérisé en ce que** ledit instrument de découpe linéaire est un fil de coupe (3) par électroérosion.

**Patentansprüche**

**1.** Endodontisches Instrument, das sich entlang einer Längsachse (50) erstreckt, wobei das Instrument mindestens einen Längsschlitz (2) über mindestens einen Teil seiner Länge aufweist, der das Instrument in mehrere verschiedene Stränge (51, 52) unterteilt,
wobei der Schlitz (2) in einem Abschnitt senkrecht zu der Längsachse (50) eine lineare, nicht geradlinige Form aufweist, der Schlitz (2) auf jedem der Stränge (51, 52) des endodontischen Instruments ein Oberflächenteilstück ausbildet, das Teil einer Regeloberfläche ist, wobei:

- eine einzige Mantellinie durch jeden Punkt läuft,
- die Mantellinien kein Teil einer Ebene, die orthogonal zu der Längsachse (50) ist, sind,
- die Mantellinien nicht parallel zu der Längsachse (50) sind,
und
- die Mantellinien nicht alle parallel zueinander sind.

**2.** Endodontisches Instrument nach Anspruch 1,
**dadurch gekennzeichnet, dass** jedes der Oberflächenteilstücke eine spiralförmige Form aufweist, die sich um die Längsachse (50) des Instruments wickelt.

**3.** Endodontisches Instrument nach einem der vorstehende Ansprüche, **dadurch gekennzeichnet, dass** der Schlitz (2) geometrische Eigenschaften aufweist, die auf unterschiedlichen benachbarten Abschnitten des Instruments unterschiedlich sind.

**4.** Endodontisches Instrument nach einem der vorstehende Ansprüche, **dadurch gekennzeichnet, dass** es mindestens zwei Längsschlitze (838, 839, 848, 849, 858, 859) über mindestens einen Teil seiner Länge aufweist, wobei mindestens einer der Schlitze in einem Abschnitt senkrecht zu der Längsachse eine lineare nicht geradlinige Form aufweist.

5. Endodontisches Instrument nach dem vorstehenden Anspruch, **dadurch gekennzeichnet, dass** sich mindestens zwei der Schlitze (848, 849, 858, 859) in mindestens einigen der Abschnitte des Instruments wieder miteinander verbinden.

6. Verfahren zum Herstellen eines endodontischen Instruments nach einem der vorstehenden Ansprüche, das sich entlang einer Längsachse (50) erstreckt, das Verfahren umfassend einen Schritt zum Ausschneiden eines Längsschlitzes (2) über mindestens einen Teil der Länge des Instruments, wobei der Ausschnitt durch ein lineares Ausschneidinstrument ausgeführt wird, das nicht orthogonal zu der Längsachse (50) ist, der Ausschnitt durch eine Bewegung des Instruments relativ zu dem linearen Ausschneidinstrument erhalten wird, die Bewegung mindestens eine Verschiebung des Instruments entlang der Längsachse (50) und eine Rotation des Instruments um die Längsachse (50) kombiniert.

7. Verfahren zum Herstellen nach dem vorstehenden Anspruch,
**dadurch gekennzeichnet, dass** das lineare Ausschneidinstrument ein Draht (3) zum Schneiden durch Elektroerosion ist.

**Claims**

1. Endodontic instrument extending along a longitudinal axis (50), said instrument having at least one longitudinal slot (2), over at least part of the length thereof, separating the instrument into a plurality of separate blades (51, 52), said slot (2) having, in a portion perpendicular to said longitudinal axis (50), a non-rectilinear linear shape, said slot (2) forming, on each of said blades (51, 52) of said endodontic instrument, a surface section within a ruled surface of which:

   - a single generator passes through each point,
   - the generators do not lie in any plane orthogonal to the longitudinal axis (50),
   - the generators are not parallel to the longitudinal axis (50),
   and
   - not all generators are parallel to each other.

2. Endodontic instrument according to claim 1, **characterized in that** each of said surface sections has a helical shape winding around the longitudinal axis (50) of said instrument.

3. Endodontic instrument according to either of the preceding claims, **characterized in that** said slot (2) has different geometric characteristics on different neighboring portions of the instrument.

4. Endodontic instrument according to any of the preceding claims, **characterized in that** it has at least two longitudinal slots (838, 839, 848, 849, 858, 859), over at least part of the length thereof, at least one of said slots having, in a portion perpendicular to said longitudinal axis, a non-rectilinear linear shape.

5. Endodontic instrument according to the preceding claim,
**characterized in that** at least two of said slots (848, 849, 858, 859) meet in at least some of the portions of the instrument.

6. Method for manufacturing an endodontic instrument according to any of the preceding claims, extending along a longitudinal axis (50), said method comprising a step of cutting a longitudinal slot (2), over at least part of the length of said instrument, said cutting being performed by a linear cutting instrument not orthogonal to said longitudinal axis (50), said cutting being obtained by moving said instrument, relative to said linear cutting instrument, said movement combining at least translating said instrument along said longitudinal axis (50) and rotating said instrument about said longitudinal axis (50).

7. Manufacturing method according to the preceding claim,
**characterized in that** said linear cutting instrument is an electroerosion cutting wire (3).

[Fig. 1]

[Fig. 2]

[Fig. 3]

[Fig. 4]

[Fig. 5]

[Fig. 6]

[Fig. 7]

[Fig. 8]

[Fig. 9]

[Fig. 10]

[Fig. 11]

849 843
842
841 848
84

[Fig. 12]

859 853
852
851 858
85

[Fig. 13]

[Fig. 14]

[Fig. 15]

[Fig. 16]

[Fig. 17]

941 944 943

940

942

4

[Fig. 18]

941

944

943 94 942

[Fig. 19]

[Fig. 20]

[Fig. 21]

954
951
952
953
95

[Fig. 22]

96
960
962
961
963

[Fig. 23]

[Fig. 24]

[Fig. 25]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2867995 A1

- FR 2964851